# EUROPEAN PATENT APPLICATION

(11) **EP 4 375 672 A1**
(43) Date of publication of application: **29.05.2024**
(21) Application number: 22845668.7
(22) Date of filing: 18.04.2022
(51) Int. Cl.: G01N 35/00, G01N 35/10

(54) **AUTOMATIC ANALYSIS DEVICE AND METHOD FOR MANAGING REAGENT WITH AUTOMATIC ANALYSIS DEVICE**

(30) Priority: 19.07.2021 JP 2021118911
(71) Applicant: HITACHI HIGH-TECH CORPORATION, Tokyo 105-6409 (JP)
(72) Inventor: KUMAGAI Takahiro, Tokyo 105-6409 (JP); MIYAKAWA Takushi, Tokyo 105-6409 (JP); WATANABE Ryota, Tokyo 105-6409 (JP)
(74) Representative: MERH-IP Matias Erny Reichl Hoffmann Patentanwälte PartG mbB
(86) International application number: PCT/JP2022/018053
(87) International publication number: WO 2023/002729

(57) **Abstract**

There are provided an automatic analyzing device and a reagent management method in the automatic analyzing device capable of managing a remaining amount of a consumable reagent with higher accuracy than in the related art.

An automatic analyzing device includes a sipper syringe 10 and a liquid feed valve 40 that dispense a consumable reagent filled in a reference electrode solution bottle 5 and an alkaline detergent bottle 39 respectively, a liquid level detection unit 38 that detects a liquid level of the consumable reagent in the reference electrode solution bottle 5 and the alkaline detergent bottle 39, and a control device 29 that calculates a remaining amount of the consumable reagent based on an estimated dispensing amount of the sipper syringe 10 and the liquid feed valve 40, in which the control device 29 corrects the estimated dispensing amount based on consumption of the consumable reagent up to a predetermined height detected by the liquid level detection unit 38 and a dispensing operation history until the liquid level reaches the predetermined height.

## Description

### Technical Field

The present invention relates to an automatic analyzing device and a reagent management method in the automatic analyzing device.

### Background Art

As an example of an electrolyte measuring device that can accurately measure an electrolyte irrespective of the concentration of a sample solution without complicating an overall configuration of the device and increasing the amount of the sample solution, PTL 1 describes an electrolyte measuring device including: a measurement unit configured to measure an electromotive force of each of a standard solution and a sample solution using an electrode unit; a dilution tank configured to dilute a sample liquid with a diluent to form the sample solution; a sample supply means for supplying the sample liquid to the dilution tank; a diluent supply means for supplying the diluent to the dilution tank; a standard solution supply means for supplying the standard solution to the dilution tank; a measurement liquid supply means for supplying the standard solution and the sample solution from the dilution tank to the electrode unit; and a control unit configured to execute a control such that the standard solution and the sample solution are alternately supplied from the dilution tank to the electrode unit and configured to execute a control such that a predetermined amount of the diluent is supplied to the dilution tank and discharged before forming the sample solution.

### Citation List

### Patent Literature

PTL 1: JP2012-189405A

### Summary of Invention

### Technical Problem

The electrolyte analyzing device described above in PTL 1 is a device that measures the concentration of a specific electrolyte (for example, sodium (Na), potassium (K), or chlorine (Cl)) in an electrolytic solution such as blood or urine of a human body, and executes the concentration measurement using an ion selective electrode.

As a general measurement method of the electrolyte concentration, serum as an electrolytic solution is directly supplied or a sample solution diluted with a diluent is supplied to an ion selective electrode to measure a liquid junction potential between the sample solution and a reference electrode solution. Before or after the above-described measurement, a standard solution is also supplied to the ion selective electrode to measure a liquid junction potential between the standard solution and the reference electrode solution, and the electrolyte concentration of the sample solution is calculated from the two liquid junction potential levels. This way, a flow type is mainly used.

In the flow type electrolyte analyzing device, the measurement is executed using a consumable liquid reagent such as the diluent, the standard solution, and the reference electrode solution.

Not only in the electrolyte analyzing device but also in an automatic analyzing device that causes a biological sample such as blood to react with an analytical reagent specifically reactive with a component to be measured in the sample and detects a complex produced by this reaction using a spectroscopic method such as electrochemiluminescence, the consumable reagent is also used.

Here, the consumption of the reagent in each measurement changes depending on an installation environment of the device or an individual difference of a liquid feed pump. Therefore, there is a problem in that the reagent consumption varies depending on devices when the measurement or the like is executed the same number of times. Therefore, there is a difference between a dispensing amount set in software and an actual used amount, which causes a problem in that, even when the reagent remains, a reagent container is replaced and the reagent is discarded. In addition, in order to prevent this problem, the reagent consumption needs to be measured in each of installation environments, which leads to an increase in service costs.

An object of the present invention is to provide an automatic analyzing device and a reagent management method in the automatic analyzing device capable of managing a remaining amount of a consumable reagent with higher accuracy than in the related art.

### Solution to Problem

The present invention includes a plurality of means for solving the above-described problem. For example, there is provided an automatic analyzing device that uses a liquid consumable reagent for measurement, the device including: a dispensing unit that dispenses the consumable reagent filled in a reagent container; a liquid level detection unit that detects a liquid level of the consumable reagent in the reagent container; and a control unit that calculates a remaining amount of the consumable reagent based on an estimated dispensing amount in the dispensing unit, in which the control unit corrects the estimated dispensing amount based on consumption of the consumable reagent up to a predetermined height detected by the liquid level detection unit and a dispensing operation history until the liquid level reaches the predetermined height.

### Advantageous Effects of Invention

According to the present invention, a remaining amount of a consumable reagent can be managed with higher accuracy than in the related art. Objects, configurations, and effects other than those described above will be clarified by describing the following embodiment.

### Brief Description of Drawings

[Fig. 1] Fig. 1 is a diagram illustrating an overall configuration of an electrolyte analyzing device which is an example of an automatic analyzing device according to an embodiment of the present invention.
[Fig. 2] Fig. 2 is a diagram illustrating a schematic configuration of an analysis tank in the electrolyte analyzing device of the embodiment.
[Fig. 3] Fig. 3 is a diagram illustrating an outline of reagent remaining amount management in the electrolyte analyzing device of the embodiment.
[Fig. 4] Fig. 4 is a diagram illustrating the outline of the reagent remaining amount management in the electrolyte analyzing device of the embodiment.

### Description of Embodiments

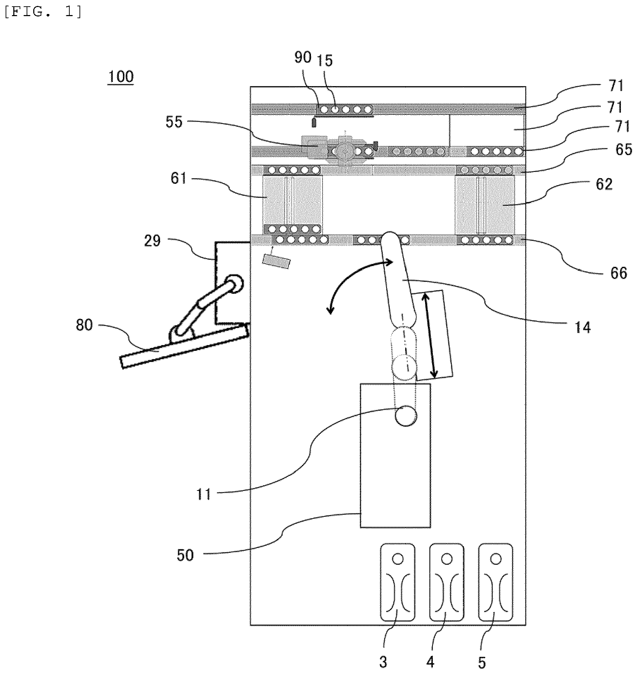

Hereinafter, an embodiment of an automatic analyzing device and a reagent management method in the automatic analyzing device according to the present invention will be described by using an electrolyte analyzing device as an example using Figs. 1 to 4. In the drawings used in the present specification, the same or corresponding components are represented by the same or similar reference numerals, and the description of these components will not be repeated.

The automatic analyzing device according to the present invention is not limited to the electrolyte analyzing device illustrated in Fig. 1, and can be used as an analysis device that analyzes another analysis item, for example, a biochemical analyzer that analyzes an analysis item of biochemistry or an immunological analyzer that analyzes an analysis item of immunity. In addition, the electrolyte analyzing device is not limited to the configuration shown in Fig. 1, and an analysis device that measures another analysis item such as a biochemical item can be separately mounted thereon.

In addition, the automatic analyzing device is not limited to a single analysis module configuration illustrated in Fig. 1, and a configuration in which two or more modules including analysis modules that can measure the various same or different analysis items or a pre-treatment module that executes a pre-treatment are connected using a transport device can be adopted.

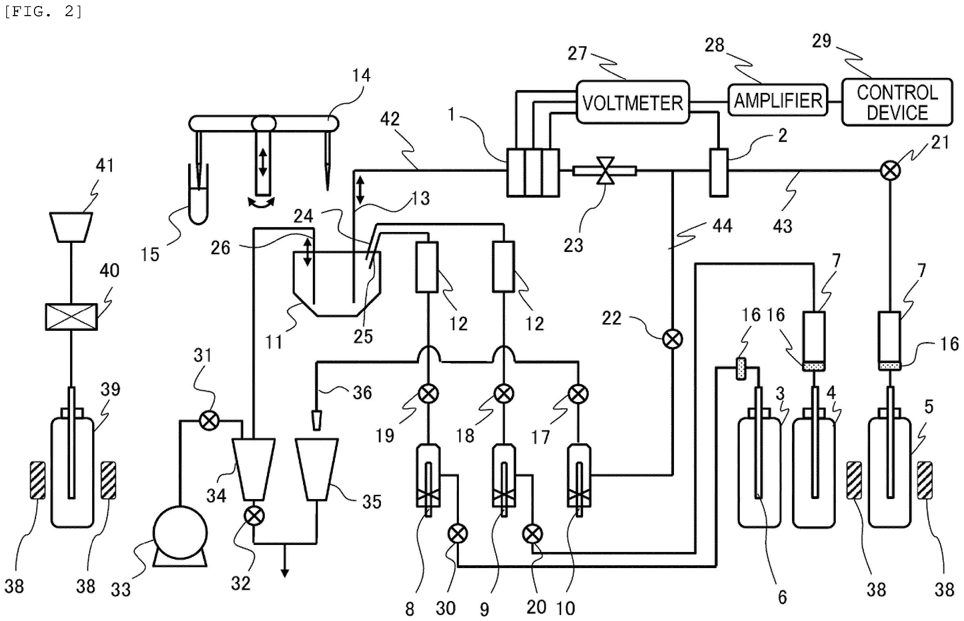

First, an example of an overall configuration or a main configuration of the electrolyte analyzing device will be described using Figs. 1 and 2. Fig. 1 is a diagram illustrating the overall configuration of the electrolyte analyzing device according to the present first embodiment, and Fig. 2 is a diagram illustrating a schematic configuration of an analysis tank in the electrolyte analyzing device.

An electrolyte analyzing device 100 illustrated in Fig. 1 is a device that uses a liquid consumable reagent for measurement, and includes a transport line 71, a gripper 55, dispensing lines 65 and 66, a pre-analysis buffer 61, a post-analysis buffer 62, an analysis tank 50, a sample probe 14, a display device 80, a control device 29, and the like.

The transport line 71 is provided in an end portion of the device, transports a transport container 90 where a plurality of sample containers 15 storing a sample loaded from a sample rack loading unit (not illustrated) are mounted to a transport position where transport is executed by the gripper 55, and transports the transport container 90 to the outside of the device after the end of the measurement.

In the present embodiment, an example where the plurality of sample containers 15 are mounted on the transport container 90 is described. However, the transport container 90 is not limited to this configuration as long as one or more sample containers 15 can be mounted on the transport container 90. Another example of the transport container 90 is a sample holder on which one sample container 15 can be mounted.

The gripper 55 is a mechanism for transporting the transport container 90 from the transport line 71 to the dispensing lines 65 and 66 or from the dispensing lines 65 and 66 to the transport line 71.

The dispensing lines 65 and 66 are a mechanism for transporting the sample container 15 to be dispensed in the transport container 90 to a dispensing position where dispensing is executed by the sample probe 14 or for transporting the transport container 90 storing the sample containers 15 from which a sample is dispensed to the post-analysis buffer 62.

The pre-analysis buffer 61 or the post-analysis buffer 62 is a space where the sample container 15 waiting to be dispensed into the analysis tank 50 or the sample container 15 after completion of the analysis operation waits to be transported to another position.

The analysis tank 50 is an analysis unit including an ISE electrode 1 that measures the concentration of an electrolyte in the sample. The details will be described using Fig. 2. The number of the analysis tanks 50 provided in the electrolyte analyzing device 100 is not limited to one and may be two or more.

The analysis tank 50 illustrated in Fig. 2 is a flow type using an ion selective electrode.

Fig. 2 illustrates, as a main mechanism of the analysis tank 50, five mechanisms including a sample dispensing unit, an electrode unit, a reagent unit, a mechanism unit, and a waste liquid mechanism and the control device 29 that controls the five mechanisms and executes calculation of the electrolyte concentration based on the measurement result and a display control.

The sample dispensing unit includes the sample probe 14. The sample such as a patient sample held in the sample container 15 is dispensed and taken into the analyzing device by the sample probe 14. Here, the sample is a collective term for analysis targets collected from a biological body of a patient and is, for example, blood or urine. An analysis target obtained by executing a predetermined pre-treatment on the sample is also called the sample.

The electrode unit includes a dilution tank 11, a sipper nozzle 13, a diluent nozzle 24, an internal standard solution nozzle 25, the ISE electrode 1, a reference electrode 2, a pinch valve 23, a voltmeter 27, and an amplifier 28. The sample dispensed by the sample dispensing unit is discharged to the dilution tank 11, is diluted with a diluent discharged from the diluent nozzle 24 into the dilution tank 11, and is stirred.

The sipper nozzle 13 is connected to the ISE electrode 1 through a flow path 42, and feeds the diluted sample solution suctioned from the dilution tank 11 to the ISE electrode 1 through the flow path 42.

On the other hand, a reference electrode solution stored in a reference electrode solution bottle 5 is fed to the reference electrode 2 through a flow path 43 by operating a sipper syringe 10 in a state where the pinch valve 23 is closed. By bringing the diluted sample solution fed to the ISE electrode flow path and the reference electrode solution fed to the reference electrode flow path into contact with each other, the ISE electrode 1 and the reference electrode 2 are electrically connected to each other. The electrode unit measures the concentration of a specific electrolyte in the sample using a potential difference between the ISE electrode 1 and the reference electrode 2.

Specifically, an ion induced membrane having a property in which an electromotive force changes depending on the concentration of a specific ion (for example, sodium ion (Na+), potassium ion (K+), or chlorine ion (Cl-)) in the sample solution is bonded to the ISE electrode 1, the ISE electrode 1 outputs an electromotive force corresponding to each of the ion concentrations in the sample solution, and an electromotive force between the ISE electrode 1 and the reference electrode 2 is acquired by the voltmeter 27 and the amplifier 28. The control device 29 calculates and displays the ion concentration in the sample from the acquired electromotive force for each of the ions. The sample solution remaining in the dilution tank 11 is discharged by the waste liquid mechanism.

The potential difference between the ISE electrode 1 and the reference electrode 2 is likely to be affected by a temperature change or the like. In order to correct a potential variation caused by the effect of the temperature change or the like, in a period between one sample measurement and the next sample measurement, an internal standard solution is discharged into the dilution tank 11 by the internal standard solution nozzle 25, and the measurement is executed as in the above-described sample. It is preferable to execute correction corresponding to a variation amount using the result of the internal standard solution measurement that is executed between the sample measurements. In addition, in this case, the internal standard solution is not diluted.

The reagent unit includes a suction nozzle 6 that suctions a reagent from a reagent container, a degassing mechanism 7, and a filter 16 and supplies a reagent required for measurement. When electrolyte measurement is executed, three types of reagents including an internal standard solution, a diluent, and a reference electrode solution are used as the reagent, and an internal standard solution bottle 3 storing the internal standard solution, a diluent bottle 4 storing the diluent, and the reference electrode solution bottle 5 storing the reference electrode solution are set in the reagent unit. Fig. 2 illustrates this state. In addition, when the device is cleaned, a cleaning solution bottle storing a cleaning solution is set in the reagent unit.

The internal standard solution bottle 3 and the diluent bottle 4 are connected to the internal standard solution nozzle 25 and the diluent nozzle 24 through the filter 16 and flow paths, respectively, and each of the nozzles is provided in a shape in which a tip is introduced into the dilution tank 11. In addition, the reference electrode solution bottle 5 is connected to the reference electrode 2 through the filter 16 and a flow path.

The degassing mechanism 7 is connected to each of the flow path between the diluent bottle 4 and the dilution tank 11 and the flow path between the reference electrode solution bottle 5 and the reference electrode 2, and the degassed reagent is supplied into the dilution tank 11 and the reference electrode 2. The reason for this is as follows. Since the flow path is put under a negative pressure by a syringe to suction the reagent from a suction pipe dipped in each of the bottles, gas dissolved in the reagent appears as bubbles in the reagent. In order to prevent the reagent from being supplied to the dilution tank 11 or the reference electrode 2 in a state where the reagent includes the bubbles, the degassing mechanism is provided.

The mechanism unit includes an internal standard solution syringe 8 that dispenses the internal standard solution filled in the internal standard solution bottle 3, a diluent syringe 9 that dispenses the diluent filled in the diluent bottle 4, the sipper syringe 10 that dispenses the reference electrode solution filled in the reference electrode solution bottle 5, solenoid valves 17, 18, 19, 20, 21, 22, and 30, and a preheat 12, and executes an operation such as liquid feeding into each of the mechanisms or between the mechanisms.

For example, the internal standard solution and the diluent are fed to the dilution tank 11 by the operations of the internal standard solution syringe 8, the diluent syringe 9, and the solenoid valves provided in the flow paths. The preheat 12 suppresses the effect of the temperature on the ISE electrode 1 by controlling the temperatures of the internal standard solution and the diluent moving to the ISE electrode 1 to be in a given range.

The waste liquid mechanism includes a first waste liquid nozzle 26, a second waste liquid nozzle 36, a vacuum bottle 34, a waste liquid receiver 35, a vacuum pump 33, and solenoid valves 31 and 32, and discharges the sample solution remaining in the dilution tank 11 or the reaction solution remaining in the flow path of the electrode unit through a flow path 44.

A cleaning tank 41 is a mechanism for specially cleaning the sample probe 14, and executes special cleaning by dipping a tip of the sample probe 14 in an alkaline detergent that is supplied into and stored in the cleaning tank 41 by the liquid feed valve 40. The liquid feed valve 40 is a mechanism for suctioning the alkaline detergent filled in an alkaline detergent bottle 39 through the suction pipe dipped in the bottle, and is configured by, for example, a solenoid pump where the discharge amount is adjusted to be constant in advance.

A liquid level detection unit 38 is a mechanism that detects the liquid level of the reference electrode solution (consumable reagent) in the reference electrode solution bottle 5 or the alkaline detergent (consumable reagent) in the alkaline detergent bottle 39, and is configured by, for example, an irradiation unit of a laser beam that oscillates a wavelength that transmits through the container without transmitting through the consumable reagent and a light receiving unit of the laser beam. When the laser beam is received, it is assumed that the liquid level detection unit 38 detects that the liquid level is present at a height where the light receiving unit is provided. Note that the liquid level detection unit 38 is not limited to a non-contact laser type, and another type such as a flow type liquid level sensor can be used.

Referring to Fig. 2, a case where the liquid level detection unit 38 is provided in the reference electrode solution bottle 5 and the alkaline detergent bottle 39 without being provided in the internal standard solution bottle 3 or the diluent bottle 4 is described. However, the liquid level detection unit 38 only needs to be provided in at least one of the bottles and may be provided in all the bottles.

Referring back to Fig. 1, the display device 80 is a device that outputs a notification to an operator of the electrolyte analyzing device 100, is a portion that displays various screens such as an operation screen for ordering a measurement item to be measured for a sample to be measured or a screen for checking the measurement result, and is configured by a liquid crystal display or the like.

The display device 80 does not need to be a liquid crystal display and may be replaced with a printer or the like. For example, the display device 80 can be configured by, for example, a display and a printer, or can be configured as a touch panel type display that inputs various parameters or settings, the measurement result, measurement request information, an instruction to start or stop analysis, and the like based on the displayed operation screen.

The control device 29 is connected to the analysis tank 50 and the like via a wired or wireless network line, and controls the operation in the electrolyte analyzing device 100 including the analysis tank 50. In addition, the control device 29 executes calculation using the potential of the ISE electrode 1 measured for the sample solution, and calculates the electrolyte concentration in the sample. At this time, the electrolyte concentration can be more accurately measured by calibration based on the measured ISE electrode potential for the internal standard solution.

The control device 29 can be configured as a computer including a CPU (Central Processing Unit), a RAM (Random Access Memory), a storage device, and an I/O port, and the RAM, the storage device, and the I/O port are configured to exchange data with the CPU via an internal bus. The I/O port is connected to each of the above-described mechanisms, and controls the operations thereof. The operation is controlled when a program stored in the storage device is read to the RAM and is executed by the CPU. In addition, an input/output device is connected to the control device 29, and an input from a user or the measurement result can be displayed.

Next, an electrolyte concentration measurement operation by the electrolyte measuring device illustrated in Fig. 2 will be described. The measurement operation is controlled by the control device 29.

First, the sample that is dispensed from the sample container 15 by the sample probe 14 of the sample dispensing unit is discharged to the dilution tank 11 of the electrode unit. After dispensing the sample to the dilution tank 11, the diluent is discharged from the diluent bottle 4 through the diluent nozzle 24 by the operation of the diluent syringe 9 to dilute the sample. As described above, in order to prevent the formation of bubbles caused by a change in the temperature or pressure of the diluent in a flow path, the sample is degassed by the degassing mechanism 7 installed in the middle of the diluent flow path. The diluted sample solution is suctioned to the ISE electrode 1 by the operation of the sipper syringe 10 or the solenoid valve 22.

On the other hand, the reference electrode solution is fed into the reference electrode 2 from the reference electrode solution bottle 5 by the pinch valve 23 and the sipper syringe 10. The reference electrode solution is, for example, a potassium chloride (KCl) aqueous solution having a predetermined concentration, and the ISE electrode 1 and the reference electrode 2 are electrically connected by bringing the sample solution and the reference electrode solution into contact with each other.

In order to suppress the effect of a variation in concentration while the sample is being fed, the electrolyte concentration in the reference electrode solution is desirably high. However, crystallization occurs in the vicinity of a saturated concentration, which may cause flow path clogging. Therefore, the electrolyte concentration in the reference electrode solution is desirably in a range of 0.5 mmol/L to 3.0 mmol/L. The ISE electrode potential with the reference electrode potential as a reference is measured using the voltmeter 27 and the amplifier 28.

In addition, the internal standard solution in the internal standard solution bottle 3 set in the reagent unit before and after the sample measurement is discharged to the dilution tank 11 by the internal standard solution syringe 8, and the electrolyte concentration measurement of the internal standard solution is executed as in the sample measurement.

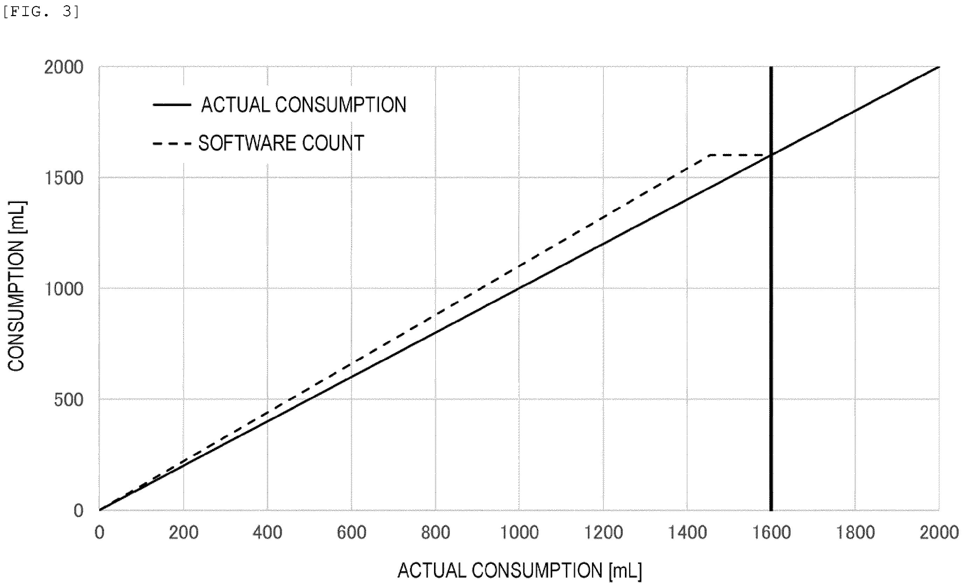

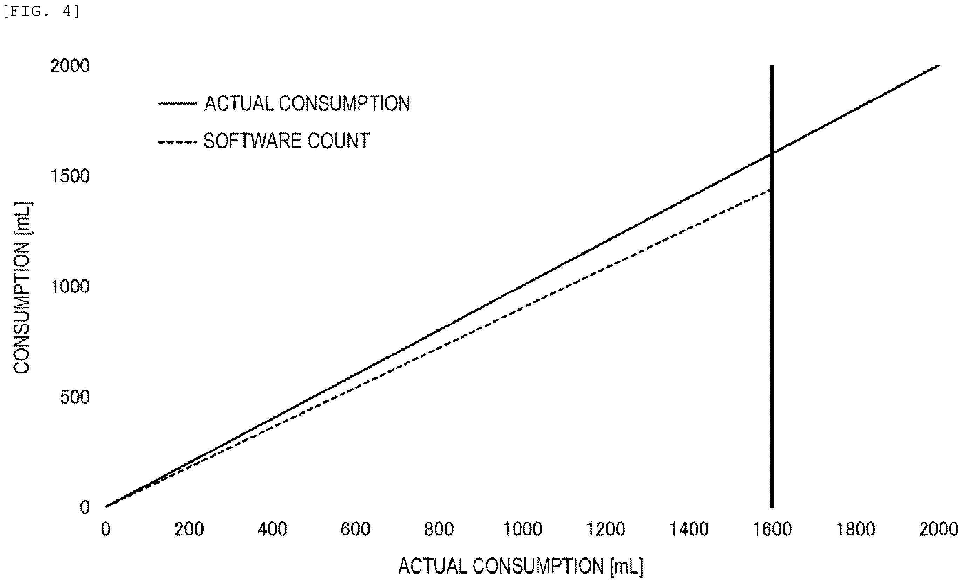

Next, the details of the characteristic remaining amount management of the consumable reagent according to the present invention will be described using Figs. 3 and 4. Figs. 3 and 4 are diagrams illustrating the outline of the reagent remaining amount management.

As described above, in the electrolyte analyzing device 100 according to the present embodiment, the liquid level detection unit 38 is provided in the reference electrode solution bottle 5 and the alkaline detergent bottle 39. The reference electrode solution is fed from the reference electrode solution bottle 5 to the reference electrode 2 by the sipper syringe 10. At this time, the liquid feed flow path includes segmented air. This segmented air is largely affected by the installation environment of the electrolyte analyzing device 100. For example, the volume of the segmented air varies depending on a variation in the atmospheric pressure caused by elevation. In addition, the volume of the segmented air is affected by the air temperature or humidity.

In addition, the alkaline detergent fed by the liquid feed valve 40 is used for cleaning the sample probe 14. The actual amount of liquid fed by the liquid feed valve 40 configured by the solenoid pump may strictly deviate from a set amount and includes an individual difference.

In the present embodiment, the control device 29 calculates a remaining amount of the consumable reagent (the reference electrode solution, the alkaline detergent) based on an estimated dispensing amount of the sipper syringe 10 and the liquid feed valve 40, and corrects the estimated dispensing amount based on consumption of the consumable reagent up to a predetermined height detected by the liquid level detection unit 38 and a dispensing operation history until the liquid level reaches the predetermined height. The process of the control device 29 corresponds to an estimation step and a correction step.

Specifically, the control device 29 updates a specified value of the dispensing amount on software required in the control device 29 based on the consumption on software of the control device 29 until the predetermined liquid level is reached and an actual used amount derived from the detection height of the liquid level detected by the liquid level detection unit 38. As a result, high-accuracy consumable remaining amount management is implemented irrespective of the installation environment of the electrolyte analyzing device 100 or the individual difference of the liquid feed valve 40.

Next, a specific example of the correction will be described.

First, the details of correcting the specified value on software based on the difference between the consumption on software and the actual used amount will be described. In this case, the control device 29 corrects the estimated dispensing amount based on a ratio of the consumption calculated by the estimated dispensing amount and the consumption calculated from a detection result by the liquid level detection unit 38.

As illustrated in Fig. 3, when the actual used amount is less than the used amount on the software management, the control device 29 outputs a constant remaining amount (≈ a consumption of 0) until the liquid level is detected by the liquid level detection unit 38 after the count on software is made equal to a remaining amount (in Fig. 3, 1,600 [mL]) at an installation position of the liquid level detection unit 38. Next, the control device 29 corrects the consumption of each of the operations after the consumable remaining amount detected by the liquid level detection unit 38 is the specified value or less, and restarts to update the remaining amount in the device.

In the correction method, for example, when the consumption on software of the reference electrode solution is 1,000 [mL] and the actual used amount is 900 [mL], the specified value of the consumption on software in the operation of consuming the reference electrode solution is set to 0.9 times (900 [mL] / 1,000 [mL]).

After the correction, the software count value after passing through the liquid level detection unit 38 and the actual remaining amount change in a state where the software count value matches the actual remaining amount. As the consumption of each of the operations, it is desirable to use the corrected value until the consumable is replaced and the liquid level of the bottle is detected by the liquid level detection unit 38 after the replacement, and it is desirable to update the consumption of each of the operations again using the same method after the liquid level of the consumable reaches the liquid level detection unit 38.

Therefore, regarding the difference between the software count after the replacement of the consumable and the actual used amount, the effect of the individual difference or the installation environment of the liquid feed valve 40 can be excluded, and the effect gradually decreases. In addition, even when wear or the like occurs in the liquid feed valve 40 or the sipper syringe 10, the effect thereof does not need to be considered.

In addition, as illustrated in Fig. 4, in a case where the actual used amount is more than the remaining amount on the software management, when the liquid level is detected by the liquid level detection unit 38, the control device 29 updates the count value on software up to the remaining amount at the detected position of the liquid level detection unit 38. In addition, the control device 29 corrects the consumption of each of the operations and continues to update the remaining amount in the device.

Since the correction is executed, the software count value after passing through the liquid level detection unit 38 and the actual remaining amount change in a state where the software count value matches the actual remaining amount. As the consumption of each of the operations, the corrected value is used until the consumable is replaced and the liquid level is detected by the liquid level detection unit 38 again.

Next, a case where the number of measurements is used as a parameter other than the consumption will be described. In this case, the control device 29 corrects the estimated dispensing amount based on a ratio of the number of measurements predicted from the estimated dispensing amount to the number of measurements until the liquid level detection unit 38 detects that the liquid level has reached a specified liquid level.

More specifically, when the number of measurements predicted from the consumption on software until the liquid level reaches the liquid level detection unit 38 is 900 and the number of measurements until the liquid level actually reaches the liquid level detection unit 38 is 1,000, the specified value of the consumption on software in the operation of consuming the consumable reagent is set to 0.9 times (900 / 1,000).

In addition, when the correction is executed based on the consumption or the number of measurements, the type of an operation can also be used for the correction such that the correction amount can be changed between a liquid feed operation that is likely to be affected by the installation environment or the like and a liquid feed operation that is not likely to be affected by the installation environment or the like. In this case, the control device 29 corrects the estimated dispensing amount based on a difference between the consumption calculated by the estimated dispensing amount and the consumption calculated by the liquid level detection unit 38, and the number of operations of the sipper syringe 10 and the liquid feed valve 40.

For example, for liquid feeding during the analysis operation, the flow path includes segmented air. In this case, the amount of liquid fed changes depending on the air pressure in the installation environment. On the other hand, for liquid feeding during the operation of filling the flow path with target liquid, the flow path does not include segmented air. In this case, the flow path does not include segmented air, and the amount of liquid fed does not substantially change.

Accordingly, a case where the consumption on software of one consumable reagent is 1,000 [mL], the actual used amount is 900 [mL], the number of operations of the liquid feed means (the sipper syringe 10 and the liquid feed valve 40) is 3,000 (in which the number of operations that is largely affected by the environment or the like is only 1,000), and the consumption of the consumable reagent in the operation that is not affected by the environment or the like is 500 [mL], will be considered.

In this case, the specified value of the operation that is largely affected by the environment or the like can be updated to a value obtained by subtracting (1,000 [mL] - 900 [mL]) / 1,000 = 0.1 [mL] from the original specified value. Alternatively, the specified value of the operation that is largely affected by the environment or the like is updated to a value obtained by multiplying the original specified value by 0.8 times (900 [mL] - 500 [mL]) / (1,000 [mL] - 500 [mL]).

Further, when the correction is executed using the above-described method, the control device 29 can calculate the number of remaining measurements in the bottle that is being currently used based on the corrected estimated dispensing amount. As a result, the number of remaining measurements can be accurately displayed in consideration of the effect of the installation environment of the device, the individual difference of the liquid feed means, or the like.

In addition to the number of remaining measurements, the control device 29 can further calculate a scheduled replacement date and time of the consumable reagent based on the corrected estimated dispensing amount and a specification history of the consumable reagent. As a result, the scheduled replacement date and time of the consumable reagent can be accurately displayed with high accuracy in consideration of the effect of the installation environment of the device, the individual difference of the liquid feed means, or the like.

Here, in a case where only the management on software is executed as in the related art, even when the reference electrode solution bottle 5 or the alkaline detergent bottle 39 is replenished with each of the consumable reagents, the remaining amount cannot be changed up to the management value on software in the control device 29. Therefore, the replenishment operation itself is meaningless.

On the other hand, in a case where a difference between the used amount on software and the actual volume is corrected as described above, when the volume is changed by replenishment or sampling, the used amount on software is corrected based on "the actual operation amount + the replenishment amount" or "the actual used amount - the sampling amount", and a difference from the actual used amount increases, which may bring about a problem in the management. In this case, an inappropriate reagent is used for the measurement, which may affect the analysis performance.

Accordingly, the control device 29 compares a remaining amount of the reagent based on the corrected estimated dispensing amount with a remaining amount of the reagent calculated by the liquid level detection unit 38, and when it is determined that a difference is equal to or greater than a predetermined threshold value, an alarm is output via the display device 80. In addition, instead of or in addition to outputting the alarm, a countermeasure such as masking the use of a target consumable reagent can be taken. As a result, an infrequent operation such as replenishment of the consumable can be prevented, and the abnormality of the flow path can be detected.

Next, the effect of the embodiment will be described.

The electrolyte analyzing device 100 according to the present embodiment is a device that uses a liquid consumable reagent for measurement, the device including: the sipper syringe 10 and the liquid feed valve 40 that dispense a consumable reagent filled in the reference electrode solution bottle 5 and the alkaline detergent bottle 39; the liquid level detection unit 38 that detects a liquid level of the consumable reagent in the reference electrode solution bottle 5 and the alkaline detergent bottle 39; and the control device 29 that calculates a remaining amount of the consumable reagent based on an estimated dispensing amount of the sipper syringe 10 and the liquid feed valve 40, in which the control device 29 corrects the estimated dispensing amount based on consumption of the consumable reagent up to a predetermined height detected by the liquid level detection unit 38 and a dispensing operation history until the liquid level reaches the predetermined height.

This way, by detecting that the specified liquid level, that is, the remaining amount is the specified value or less, a difference from the value managed on software can be detected. This difference is generated by the effect of an individual difference such as the installation environment of the device or a deviation from the set value of the liquid feed valve 40. Therefore, by correcting the specified value of the consumption on software of each of the liquid feed operations using this difference, the effect of the individual difference or the difference in the installation environment can be reflected, and the appropriate reagent remaining amount management can be implemented irrespective of the installation environment or the individual difference of the pump. Accordingly, the consumable reagent can be used up without waste, and the replacement frequency of the consumable reagent can be reduced. In addition, the consumption can be automatically corrected, which can also contribute to a reduction in service costs.

In addition, the control device 29 corrects the estimated dispensing amount based on a ratio of the consumption calculated by the estimated dispensing amount and the consumption calculated from a detection result by the liquid level detection unit 38. Therefore, the management can be implemented with a simple control, and the improvement of the accuracy of the consumable remaining amount management can be expected.

Further, the control device 29 corrects the estimated dispensing amount based on a ratio of the number of measurements predicted from the estimated dispensing amount to the number of measurements until the liquid level detection unit 38 detects that the liquid level has reached a specified liquid level. As a result, by using, as a reference, the number of measurements having a high importance for a customer during the operation of the device, the consumable remaining amount management corresponding to the operation can be implemented.

In addition, the control device 29 corrects the estimated dispensing amount based on a difference between the consumption calculated by the estimated dispensing amount and the consumption calculated by the liquid level detection unit 38, and the number of operations of the sipper syringe 10 and the liquid feed valve 40. As a result, the consumption can be corrected for only the operation where a difference in consumption due to the installation environment or the like is likely to be generated, and the consumption can be corrected with high accuracy irrespective of an operation method of a customer.

Further, the control device 29 further calculates the number of remaining measurements based on the corrected estimated dispensing amount. As a result, it is possible to notify a user when the consumable is replaced, and the convenience can be further improved.

In addition, the control device 29 further calculates a scheduled replacement date and time of the consumable reagent based on the corrected estimated dispensing amount and a specification history of the consumable reagent. As a result, it is possible to notify a user when the consumable is replaced, and the convenience can be further improved.

Further, the electrolyte analyzing device 100 further includes the display device 80 that outputs a notification to an operator of the electrolyte analyzing device 100, and the control device 29 compares a remaining amount of the reagent based on the corrected estimated dispensing amount with a remaining amount of the reagent calculated by the liquid level detection unit 38, and when it is determined that a difference is equal to or greater than a predetermined threshold value, an alarm is output via the display device 80. As a result, abnormality of the device and the consumable can be detected, and the reliability of the device can be improved.

### <Others>

The present invention is not limited to the above-described embodiment, and various modifications and applications can be made. The embodiment has been described in detail in order to easily describe the present invention, and the present invention is not necessarily limited to including all the configurations described above.

### Reference Signs List

1: ISE electrode
2: reference electrode
3: internal standard solution bottle
4: diluent bottle
5: reference electrode solution bottle (reagent container)
6: suction nozzle
7: degassing mechanism
8: internal standard solution syringe
9: diluent syringe
10: shipper syringe (dispensing unit)
11: dilution tank
12: preheat
13: sipper nozzle
14: sample probe
15: sample container
16: filter
17, 18, 19, 20, 21, 22, 30, 31, 32: solenoid valve
23: pinch valve
24: diluent nozzle
25: internal standard solution nozzle
26: first waste liquid nozzle
27: voltmeter
28: amplifier
29: control device (control unit)
33: vacuum pump
34: vacuum bottle
35: waste liquid receiver
36: second waste liquid nozzle
38: liquid level detection unit
39: alkaline detergent bottle (reagent container)
40: liquid feed valve (dispensing unit)
41: cleaning tank
42, 43, 44: flow path
50: analysis tank
55: gripper
61: pre-analysis buffer
62: post-analysis buffer
65, 66: dispensing line
71: transport line
80: display device (notification unit)
90: transport container
100: electrolyte analyzing device

## Claims

1. An automatic analyzing device that uses a liquid consumable reagent for measurement, the device comprising:
a dispensing unit that dispenses the consumable reagent filled in a reagent container;
a liquid level detection unit that detects a liquid level of the consumable reagent in the reagent container; and
a control unit that calculates a remaining amount of the consumable reagent based on an estimated dispensing amount in the dispensing unit, wherein
the control unit corrects the estimated dispensing amount based on consumption of the consumable reagent up to a predetermined height detected by the liquid level detection unit and a dispensing operation history until the liquid level reaches the predetermined height.

2. The automatic analyzing device according to claim 1, wherein the control unit corrects the estimated dispensing amount based on a ratio of the consumption calculated by the estimated dispensing amount and the consumption calculated from a detection result by the liquid level detection unit.

3. The automatic analyzing device according to claim 1, wherein the control unit corrects the estimated dispensing amount based on a ratio of the number of measurements predicted from the estimated dispensing amount to the number of measurements until the liquid level detection unit detects that the liquid level has reached a specified liquid level.

4. The automatic analyzing device according to claim 1, wherein the control unit corrects the estimated dispensing amount based on a difference between the consumption calculated by the estimated dispensing amount and the consumption calculated by the liquid level detection unit, and the number of operations of the dispensing unit.

5. The automatic analyzing device according to claim 1, wherein the control unit further calculates the number of remaining measurements based on the corrected estimated dispensing amount.

6. The automatic analyzing device according to claim 1, wherein the control unit further calculates a scheduled replacement date and time of the consumable reagent based on the corrected estimated dispensing amount and a specification history of the consumable reagent.

7. The automatic analyzing device according to claim 1, further comprising:
a notification unit that outputs a notification to an operator of the automatic analyzing device, wherein
the control unit compares a remaining amount of the reagent based on the corrected estimated dispensing amount with a remaining amount of the reagent calculated by the liquid level detection unit, and when it is determined that a difference is equal to or greater than a predetermined threshold value, an alarm is output via the notification unit.

8. A reagent management method in an automatic analyzing device that uses a liquid consumable reagent for measurement, the method comprising:
an estimation step of calculating a remaining amount of the consumable reagent based on an estimated dispensing amount in a dispensing unit that dispenses the consumable reagent filled in a reagent container; and
a correction step of correcting the estimated dispensing amount based on consumption of the consumable reagent up to a predetermined height detected by a liquid level detection unit that detects a liquid level of the consumable reagent in the reagent container and a dispensing operation history until the liquid level reaches the predetermined height.
